# EUROPÄISCHE PATENTSCHRIFT

(11) **EP 0 552 668 B1**
(45) Veröffentlichungstag und Bekanntmachung des Hinweises auf die Patenterteilung: **14.06.1995**
(21) Anmeldenummer: 93100494.9
(22) Anmeldetag: 14.01.1993
(51) Int. Cl.: B60R 22/46

(54) **Gurtstraffer mit pyrotechnischem Kolben/Zylinder-Antrieb**
Belt tightener with pyrotechnic piston-cylinder motor
Tendeur de ceinture avec moteur pyrotechnique à piston-cylindre

(30) Priorität: 20.01.1992 DE 4201359
(43) Veröffentlichungstag der Anmeldung: 28.07.1993
(73) Patentinhaber: TRW Occupant Restraint Systems GmbH, 73553 Alfdorf (DE)
(72) Erfinder: Föhl, Artur, W-7060 Schorndorf (DE)
(74) Vertreter: Degwert, Hartmut, Dipl.-Phys.

(56) Entgegenhaltungen:
- EP-A- 505 823
- EP-A- 0 186 880
- US-A- 4 258 934
- US-A- 4 458 921

## Beschreibung

Die Erfindung betrifft einen Gurtstraffer mit pyrotechnischem Kolben/Zylinder-Antrieb, bei dem Zylinder und Kolben sowie ein Gehäuseblock, in dem ein Ende des Zylinders befestigt ist, eine schwenkbar gelagerte, fahrzeugsensitive Masse bilden und ein am Kolben befestigtes Seil aus dem Gehäuseblock herausgeführt ist. Ein derartiger Gurtstraffer ist aus des nachveröffentlichten EP-A-505 823 bekannt.

Die fahrzeugsensitive Verschwenkung des Gehäuseblocks wird in gewissem Maße durch das aus diesem herausgeführte, am Kolben befestigte Seil behindert, da das Seil, welches beispielsweise zum Umfang einer Seilscheibe an einer Seite eines Gurtaufrollers führt, der Bewegung des Gehäuseblocks nicht folgen kann und eine Relativbewegung zwischen Seil und Gehäuseblock auftritt. Um ein feinfühliges, fahrzeugsensitives Ansprechen zu gewährleisten, sollte eine Behinderung der Verschwenkung des Gehäuseblocks durch das Zugseil vermieden werden. Es wurde bereits versucht, dies dadurch zu erreichen, daß eine begrenzte Axialverschiebung des Seils in einer Bohrung des Kolbens zugelassen wird. Die so erreichte Verbesserung war jedoch unbefriedigend, weil das Seil aufgrund seiner Oberflächenstruktur dazu neigte, an der Innenwandung der Bohrung des Kolbens zu verhaken.

Der Erfindung liegt die Aufgabe zugrunde, eine Verschwenkung des Gehäuseblocks ohne Behinderung durch das Seil zu ermöglichen.

Diese Aufgabe wird bei einem Gurtstraffer der eingangs angegebenen Art erfindungsgemäß dadurch gelöst, daß der Kolben in dem Zylinder mit einem solchen axialen und radialen Spiel aufgenommen ist, daß er bei fahrzeugsensitiver Verschwenkung des Gehäuseblocks axial im Zylinder verschoben wird und so die Verschwenkung des Gehäuseblocks nicht behindert, und daß der Kolben mit einer deformierbaren Ringdichtung versehen ist, die bis zur Beaufschlagung des Kolbens mit Druckgas am kegelförmigen Grunde einer Ringnut des Kolbens ohne Berührung der Innenwandung des Zylinders angeordnet ist und unter dem Einfluß der Druckbeaufschlagung in Axialrichtung entlang dem kegelförmigen Grund der Ringnut verschoben und zugleich durch die Steigung des kegelförmigen Grundes der Ringnut radial auswärts in Anlage an der Innenwandung des Zylinders verlagert wird. Gemäß der Erfindung wird also im Ruhezustand ein radiales und axiales Spiel des Kolbens im Zylinder zugelassen, so daß sich dieser mit dem Seil frei bewegen kann. Bei der Verschwenkung des Gehäuseblocks erfolgt daher eine Axialverlagerung des Kolbens und des daran befestigten Seils. Bei Beaufschlagung des Kolbens durch die von einem pyrotechnischen Gasgenerator gelieferten Druckgase muß allerdings eine Abdichtung zwischen Kolben und Zylinderinnenwandung gewährleistet sein. Dies wird erfindungsgemäß dadurch gewährleistet, daß die Ringdichtung durch die Druckbeaufschlagung in Axialrichtung entlang dem kegelförmigen Grund der Ringnut verschoben und zugleich durch den Rampeneffekt radial gedehnt wird, bis sie mit der Innenwandung des Zylinders in Berührung kommt und den Kolben im Zylinder abdichtet.

Weitere Merkmale und Vorteile der Erfindung ergeben sich aus den Unteransprüchen sowie aus der folgenden Beschreibung einer vorteilhaften Ausführungsform anhand der Zeichnung, auf die Bezug genommen wird. In der Zeichnung zeigen:
- Fig. 1: eine teils geschnitten gezeigte Draufsicht eines Gurtaufrollers mit pyrotechnischem Gurtstraffer;
- Fig. 2: eine teils geschnitten gezeigte Seitenansicht desselben Gurtaufrollers mit Gurtstraffer;
- Fig. 3: einen vergrößerten Teilschnitt einer ersten Ausführungsform des Kolben/Zylinder-Antriebs; und
- Fig. 4: eine der Fig. 3 analoge Schnittansicht einer zweiten Ausführungsform.

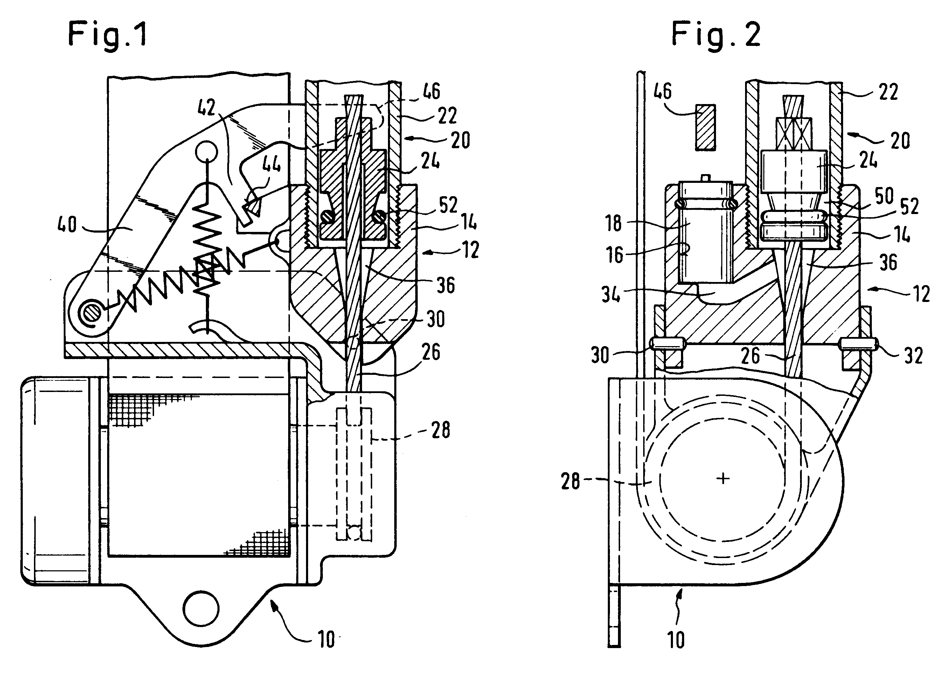

Der in den Figuren 1 und 2 allgemein mit 10 bezeichnete Gurtaufroller ist mit einem allgemein mit 12 bezeichneten Gurtstraffer zu einer Baugruppe vereinigt. Der Gurtstraffer 12 verfügt über einen pyrotechnischen Kolben/Zylinder-Antrieb mit mechanischer Auslösung durch Schlagzündung. Die fahrzeugsensitive Masse ist durch einen Gehäuseblock 14, den in eine Bohrung 16 desselben eingesetzten Gasgenerator 18 sowie durch den allgemein mit 20 bezeichneten Kolben/Zylinder-Antrieb gebildet. Der Zylinder 22 ist mit seinem einen Ende in eine Gewindebohrung des Gehäuseblocks 14 eingeschraubt. Der im Zylinder 22 aufgenommene Kolben 24 ist mit einem Zugseil 26 verbunden, das aus dem Gehäuseblock 14 herausgeführt und zum Umfang einer Seilscheibe 28 an der Seite des Gurtaufrollers 10 geführt ist. Der Gehäuseblock 14 ist an dem lasttragenden Gehäuse des Gurtaufrollers 10 auf zwei Schwenkstiften 30, 32 schwenkbar gelagert. Diese Schwenklager liegen auf der Höhe des Austritts des Zugseils 26 aus dem Gehäuseblock 14, so daß bei einer Verschwenkung des Gehäuseblocks 14 relativ zu dem lasttragenden Gehäuse des Gurtaufrollers 10 die Relativbewegungen des Zugseils 26 minimiert werden. Die Auslaßöffnung des Gasgenerators 18 mündet in einen Kanal 34, der seinerseits in einen Raum 36 unter dem Kolben 24 mündet.

Der Kolben 24 ist in dem Zylinder 22 im Ruhezustand, also ohne Beaufschlagung durch Druckgase aus dem Gasgenerator 18, mit geringem axialen und radialen Spiel aufgenommen, so daß er im Zylinder 22 leichtgängig verschiebbar ist. Bei einer fahrzeugsensitiven Verschwenkung des Gehäuseblocks 14 tritt daher keine Behinderung durch Relativverschiebung des Zugseils 26 zum Gehäuseblock 14 ein.

Wie aus Fig. 1 ersichtlich ist, ist an dem lasttragenden Gehäuse des Gurtaufrollers 10 ein federbelasteter Schlaghebel 40 schwenkbar gelagert. Der Schlaghebel 40 stützt sich mit einem Arm 42 auf einer Auflagefläche 44 des Gehäuseblocks 14 ab, so daß ein an seinem freien Ende gebildetes Schlagteil 46 dem mit einem Schlagzünder versehenen Ende des Gasgenerators 18 im Abstand gegenüberliegt, wie aus Fig. 2 ersichtlich ist. Bei der fahrzeugsensitiven Verschwenkung des Gehäuseblocks 14 gleitet die Stützfläche am Ende des Armes 42 des Schlaghebels 40 über die Auflagefläche 44 des Gehäuseblocks 14, bis die Kante dieser Auflagefläche 44 erreicht ist und der Schlaghebel 40 plötzlich freigegeben wird. Das Schlagteil 46 am Ende des Schlaghebels 40 wird dann durch dessen Federbeaufschlagung gegen den Schlagzünder des Gasgenerators 18 getrieben und löst diesen aus. Die dann durch den Gasgenerator 18 erzeugten Druckgase werden über den Verbindungskanal 34 in den Raum 36 unter dem Kolben 24 eingeleitet.

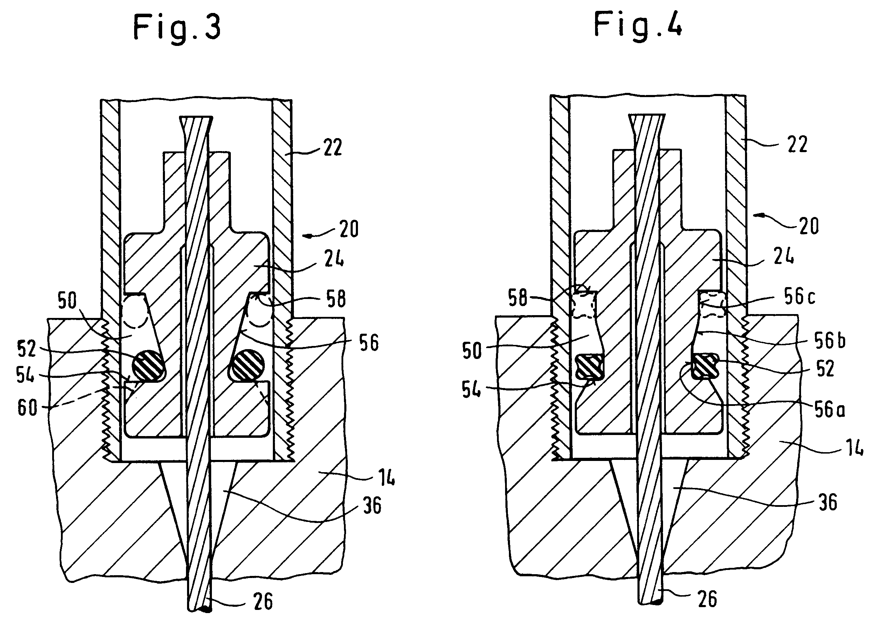

Der Kolben 24 ist mit einer Ringnut 50 versehen, deren Ausgestaltung und Funktion aus den Figuren 3 und 4 ersichtlich ist. In der Ringnut 50 des Kolbens 24 ist eine Ringdichtung 52 angeordnet. Die Ringdichtung 52 liegt an einer radialen Schulter 54 der Ringnut 50 sowie am Grunde 56 derselben an. Sie besteht aus einem gummielastischen Material. Der Grund 56 der Ringnut 50 ist kegelförmig ausgebildet und bildet eine ansteigende Rampe, die sich bis zu einer radialen Ringschulter 58 der Ringnut 50 erstreckt. Wie aus der Zeichnung ersichtlich ist, ist der Kolben 24 mit axialem und radialem Spiel in dem Zylinder 22 aufgenommen. Die Ringdichtung 52 befindet sich bei dem mit durchgezogenen Linien eingezeichneten Ruhezustand nicht in Berührung mit der Innenwandung des Zylinders 22.

Unter der Wirkung der Druckbeaufschlagung des Kolbens 24 wird die Ringdichtung 52 in Axialrichtung entlang dem kegelförmigen Grund 56 der Ringnut 50 vorgetrieben und dabei zugleich in Radialrichtung aufgeweitet. Die Axialbewegung der Ringdichtung 52 wird durch die radiale Schulter 58 der Ringnut 50 begrenzt, während ihre radiale Ausdehnung durch den Dichtungseingriff mit der Innenwandung des Zylinders 22 begrenzt wird. In Fig. 3 ist der Zustand der Ringdichtung 52, nachdem dieser bis zur radialen Schulter 58 verlagert worden ist, gestrichelt eingezeichnet. In diesem Zustand ist der Kolben 54 in dem Zylinder 22 abgedichtet.

Gemäß einer vorteilhaften Ausführungsform, die in Fig. 3 gestrichelt angedeutet ist, geht die Ringschulter 54 der Ringnut 50 über eine Schrägfläche 60 in die Mantelfläche des Kolbens 24 über. Diese Schrägfläche 60 gibt einen Teil der Stirnfläche der Ringdichtung 52 frei, so daß zu Beginn der Druckbeaufschlagung eine größere radiale Flächenkomponente der Ringdichtung 52 für die Druckbeaufschlagung wirksam ist.

Bei der in Fig. 3 gezeigten Ausführungsform ist die Ringdichtung 52 von kreisrundem Querschnitt. Bei der Ausführungsform nach Fig. 4 wird eine Ringdichtung 52 mit sogenanntem Quadring-Querschnitt verwendet. Bei dieser Ausführungsform besteht der Grund 56 der Ringnut 50 aus einem ersten, zylindrischen Abschnitt 56a, einem zweiten, daran anschließenden, kegelförmigen Abschnitt 56b, und einem dritten, zylindrischen Abschnitt 56c. Die Wirkungsweise ist ähnlich wie bei der in Fig. 3 gezeigten Ausführungsform.

## Patentansprüche

1. Gurtstraffer mit pyrotechnischem Kolben/Zylinder-Antrieb, bei dem Zylinder (22) und Kolben (24) sowie ein Gehäuseblock (14), in dem ein Ende des Zylinders (22) befestigt ist, eine schwenkbar gelagerte, fahrzeugsensitive Masse bilden und ein am Kolben (24) befestigtes Seil (26) aus dem Gehäuseblock (14) herausgeführt ist, dadurch gekennzeichnet, daß der Kolben (24) in dem Zylinder (22) mit einem solchen axialen und radialen Spiel aufgenommen ist, daß er bei fahrzeugsensitiver Verschwenkung des Gehäuseblocks (14) axial im Zylinder (22) verschoben wird und so die Verschwenkung des Gehäuseblocks (14) nicht behindert, und daß der Kolben (24) mit einer deformierbaren Ringdichtung (52) versehen ist, die bis zur Beaufschlagung des Kolbens (24) mit Druckgas am kegelförmigen Grunde (56) einer Ringnut (50) des Kolbens (24) ohne Berührung der Innenwandung des Zylinders (22) angeordnet ist und unter dem Einfluß der Druckbeaufschlagung in Axialrichtung entlang dem kegelförmigen Grund (56) der Ringnut (50) verschoben und zugleich durch die Steigung des kegelförmigen Grundes (56) der Ringnut (50) radial auswärts in Anlage an der Innenwandung des Zylinders (22) verformt wird.

2. Gurtstraffer nach Anspruch 1, dadurch gekennzeichnet, daß der Gehäuseblock (14) an dem lasttragenden Gehäuse eines Gurtaufrollers (10) gelagert ist, der mit dem Gurtstraffer (12) eine Baugruppe bildet.

3. Gurtstraffer nach Anspruch 1 oder 2, dadurch gekennzeichnet, daß eine Gasgeneratorparone (18) mit Schlagzünder in eine Bohrung (16) des Gehäuseblocks (14) eingesetzt ist und ein federbeaufschlagter Schlaghebel (40) an dem Gehäuseblock (14) so abgestützt ist, daß sein Schlagteil (46) im Abstand von dem Schlagzünder gehalten ist, bei ausreichender Verschwenkung des Gehäuseblocks (14) jedoch freigegeben wird und auf dem Schlagzünder aufschlägt.

4. Gurtstraffer nach einem der vorstehenden Ansprüche, dadurch gekennzeichnet, daß die Austrittsöffnung für das Seil (26) in dem Gehäuseblock (14) auf Höhe der Schwenkachse (30, 32) desselben liegt.

5. Gurtstraffer nach einem der vorstehenden Ansprüche, dadurch gekennzeichnet, daß die Ringnut (50) des Kolbens (24) auf der Seite der Gasbeaufschlagung an eine von der Mantelfläche des Kolbens (24) ausgehende schräge Ringfläche (60) anschließt, die einen Teil der Oberfläche der Ringdichtung (52) zur Gasbeaufschlagung freilegt.

6. Gurtstraffer nach Anspruch 5, dadurch gekennzeichnet, daß an die schräge Ringfläche (60) eine radiale Ringschulter (54) anschließt, an der die Ringdichtung (52) bis zur Gasbeaufschlagung anliegt.

7. Gurtstraffer nach einem der vorstehenden Ansprüche, dadurch gekennzeichnet, daß der Grund (56) der Ringnut (50) des Kolbens (24) eine von einer ersten radialen Ringschulter (54), an welcher die Ringdichtung (52) bis zur Gasbeaufschlagung anliegt, bis zu einer zweiten radialen Ringschulter (58), welche die Axialbewegung der Ringdichtung (52) begrenzt, ansteigende Rampenfläche bildet.

8. Gurtstraffer nach Anspruch 7, dadurch gekennzeichnet, daß die Ringdichtung (52) einen Kreisquerschnitt aufweist.

9. Gurtstraffer nach einem der vorstehenden Ansprüche, dadurch gekennzeichnet, daß der Grund (56) der Ringnut (50) des Kolbens (24) eine von einer ersten radialen Ringschulter (54), an welcher die Ringdichtung (52) bis zur Gasbeaufschlagung anliegt, bis zu einer zweiten radialen Ringschulter (58), welche die Axialbewegung der Ringdichtung (52) begrenzt, verlaufende Ringfläche bildet, die neben der ersten Radialschulter (54) eine erste zylindrische Fläche (56a), neben der zweiten radialen Ringschulter (58) eine zweite zylindrische Fläche (56c) und dazwischen eine ansteigende Rampenfläche (56b) aufweist.

10. Gurtstraffer nach Anspruch 9, dadurch gekennzeichnet, daß die Ringdichtung (52) einen Quadring-Querschnitt aufweist.

## Claims

1. Belt tightener having a pyrotechnical piston/cylinder drive in which the cylinder (22) and piston (24) as well as a housing block (14) in which one end of the cylinder (22) is secured form a pivotally mounted vehicle-sensitive mass and a cable (26) secured to the piston (24) is led out of the housing block (14), characterized in that the piston (24) is accommodated in the cylinder (22) with an axial and radial play such that on vehicle-sensitive pivoting of the housing block (14) it is displaced axially in the cylinder (22) and thus does not obstruct the pivoting of the housing block (14), and that the piston (24) is provided with a deformable annular seal (52) which until the piston (24) is subjected to pressurized gas is arranged at the conical bottom (56) of an annular groove (50) of the piston (24) without contacting the inner wall of the cylinder (22) and under the influence of the pressure action in the axial direction is displaced along the conical bottom (56) of the annular groove (50) and at the same time by the rise of the conical bottom (56) of the annular groove (50) is deformed radially outwardly into engagement with the inner wall of the cylinder (22).

2. Belt tightener according to claim 1, characterized in that the housing block (14) is mounted on the loadbearing housing of a belt retractor (10) which forms an assembly with the belt tightener (12).

3. Belt tightener according to claim 1 or 2, characterized in that a gas generator cartridge (18) comprising a percussion igniter is inserted into a bore (16) of the housing block (14) and a spring-loaded strike lever (40) is supported on the housing block (14) in such a manner that its strike member (46) is held spaced from the percussion igniter but on adequate pivoting of the housing block (14) is freed and strikes the percussion igniter.

4. Belt tightener according to any one of the preceding claims, characterized in that the outlet opening for the cable (26) in the housing block (14) lies at the level of the pivot axis (30, 32) thereof.

5. Belt tightener according to any one of the preceding claims, characterized in that the annular groove (50) of the piston (24) on the side of the gas action adjoins an inclined annular surface (60) which originates from the outer surface of the piston (24) and which exposes part of the surface of the annular seal (52) for the gas action.

6. Belt tightener according to claim 5, characterized in that the inclined annular surface (60) is adjoined by a radial annular shoulder (54) on which the annular seal (52) bears until subjected to the gas action.

7. Belt tightener according to any one of the preceding claims, characterized in that the bottom (56) of the annular groove (50) of the piston (24) comprises a ramp surface which rises from a first radial annular shoulder (54) on which the annular seal (52) bears until the gas action up to a second radial annular shoulder (58) which limits the axial movement of the annular seal (52).

8. Belt tightener according to claim 7, characterized in that the annular seal (52) has a circular cross-section.

9. Belt tightener according to any one of the preceding claims, characterized in that the bottom (56) of the annular groove (50) of the piston (24) forms an annular surface which extends from a first radial annular shoulder (54) on which the annular seal (52) bears until the gas action up to a second radial annular shoulder (58) limiting the axial movement of the annular seal (52) and which comprises adjacent the first annular shoulder (54) a first cylindrical surface (56a), adjacent the second radial annular shoulder (58) a second cylindrical surface (56c) and therebetween a rising ramp surface (56b).

10. Belt tightener according to claim 9, characterized in that the annular seal (52) has a "Quadring" cross-section.

## Revendications

1. Tendeur de ceinture comprenant une commande pyrotechnique à piston et cylindre, dans lequel un cylindre (22) et un piston (24) forment, conjointement avec un bloc-boîtier (14) dans lequel est fixée une extrémité du cylindre (22) une masse montée pivotante, sensible au véhicule, et un câble (26) fixé au piston (24) sort du bloc-boîtier (14), caractérisé en ce que le piston (24) est reçu dans le cylindre (22) avec un tel jeu axial et radial qu'il est déplacé axialement dans le cylindre (22) lors d'un pivotement du bloc-boîtier (14) sensible au véhicule et ne gêne pas, de ce fait, le pivotement du bloc-boîtier (14), et en ce que le piston (24) est pourvu d'un joint annulaire (52) déformable qui est disposé, jusqu'au moment où le piston (24) est alimenté par un gaz sous pression, contre le fond conique (56) d'une rainure annulaire (50) du piston (24) sans toucher la paroi intérieure du cylindre (22) et glisse, sous l'influence de la pression exercée, dans la direction axiale le long du fond conique (56) de la rainure annulaire (50) et est en même temps déplacé radialement vers l'extérieur en appui contre la paroi intérieure du cylindre (22) par la déclivité du fond conique (56) de la rainure annulaire (50).

2. Tendeur de ceinture suivant la revendication 1, caractérisé en ce que le bloc-boîtier (14) est monté sur un boîtier porte-charge d'un enrouleur de ceinture (10) qui forme un sous-groupe avec le tendeur de ceinture (12).

3. Tendeur de ceinture suivant la revendication 1 ou 2, caractérisé en ce qu'une cartouche (18) engendrant un gaz et pourvue d'une amorce à percussion est logée dans un alésage (16) du bloc-boîtier (14) et un levier de frappe (40) se trouvant sous l'action d'un ressort prend appui contre le bloc-boîtier (14) de telle manière que la partie de frappe (46) de ce levier soit maintenue à distance de l'amorce à percussion, mais qu'elle soit libérée lors d'un pivotement suffisant du bloc-boîtier (14) et vienne alors frapper l'amorce à percussion.

4. Tendeur de ceinture suivant l'une des revendications précédentes, caractérisé en ce que l'ouverture du bloc-boîtier (14) par laquelle sort le câble (26) se situe à la hauteur des axes de pivotement (30, 32) de ce bloc.

5. Tendeur de ceinture suivant l'une des revendications précédentes, caractérisé en ce que du côté alimenté par le gaz, la rainure annulaire (50) du piston (24) se raccorde à un plan annulaire incliné (60), partant de la surface d'enveloppe du piston (24), qui dégage une partie de la surface du joint annulaire (52) pour l'application du gaz.

6. Tendeur de ceinture suivant la revendication 5, caractérisé en ce qu'un épaulement annulaire radial (54) contre lequel s'applique le joint annulaire (52) jusqu'à l'entrée en action du gaz se raccorde au plan incliné annulaire (60).

7. Tendeur de ceinture suivant l'une des revendications précédentes, caractérisé en ce que le fond (56) de la rainure annulaire (50) du piston (24) forme une rampe qui s'élève entre un premier épaulement annulaire radial (54), contre lequel s'applique le joint annulaire (52) jusqu'à l'entrée en action du gaz, et un second épaulement annulaire radial (58) qui limite le mouvement axial du joint annulaire (52).

8. Tendeur de ceinture suivant la revendication 7, caractérisé en ce que le joint annulaire (52) présente une section circulaire.

9. Tendeur de ceinture suivant l'une des revendications précédentes, caractérisé en ce que le fond (56) de la rainure annulaire (50) du piston (24) forme une surface annulaire s'étendant depuis un premier épaulement annulaire radial (54) contre lequel s'applique le joint annulaire (52) avant l'entrée en action du gaz jusqu'à un second épaulement annulaire radial limitant le mouvement axial du joint annulaire (52), qui présente, à côté du premier épaulement radial (54), une première surface cylindrique (56a), à côté du second épaulement annulaire radial (58), une seconde surface annulaire (56c), et entre les deux une surface (56b) formant une rampe ascendante.

10. Tendeur de ceinture suivant la revendication 9, caractérisé en ce que le joint annulaire (52) présente une section quadrangulaire.
